(19) Europäisches Patentamt / European Patent Office / Office européen des brevets

(11) **EP 2 918 179 B1**

(12) **EUROPEAN PATENT SPECIFICATION**

(45) Date of publication and mention
of the grant of the patent:
**12.10.2016 Bulletin 2016/41**

(51) Int Cl.:
**A23L 3/3409** *(2006.01)*    **A23L 3/3418** *(2006.01)*
**A23B 7/148** *(2006.01)*

(21) Application number: **15000695.5**

(22) Date of filing: **10.03.2015**

(54) **CONTROL APPARATUS FOR CONTROLLED ATMOSPHERE CELLS FOR STORING PERISHABLE ITEMS**

STEUERUNGSVORRICHTUNG FÜR ZELLEN MIT GESTEUERTER ATMOSPHÄRE ZUR LAGERUNG VERDERBLICHER GÜTER

APPAREIL DE COMMANDE POUR CELLULES À ATMOSPHÈRE CONTRÔLÉE POUR LE STOCKAGE DE DENRÉES PÉRISSABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2014  IT MI20140386**

(43) Date of publication of application:
**16.09.2015  Bulletin 2015/38**

(73) Proprietor: **Isolcell S.p.A.**
**39055 Laives (Bolzano) (IT)**

(72) Inventor: **Brackmann, Auri**
**97.110-767 Santa Maria, RS (BR)**

(74) Representative: **Forattini, Amelia**
**Internazionale Brevetti**
**Ingg. ZINI, MARANESI & C. S.r.l.**
**Piazza Castello 1**
**20121 Milano (IT)**

(56) References cited:
**WO-A1-2011/110192    US-A- 4 228 197**
**US-A- 4 754 611    US-A- 5 249 428**

**Description**

The present invention relates to a control apparatus for controlled atmosphere cells for storing perishable items.

As is known, perishable items such as fruit and vegetables are often stored and transported in controlled atmosphere cells, known as "CA cells", in which the temperature and atmospheric composition can be controlled in order to prolong the life of the products.

CA cells are normally gas-tight and are provided with systems for monitoring and controlling the temperature and the levels of oxygen, carbon dioxide and nitrogen.

Atmosphere control systems generally operate by repeatedly sampling the gas levels within the cell and by adding or removing the gases in order to keep the atmosphere at the desired values.

The reference values are generally predetermined on the basis of the knowledge acquired in previous experiences with the stored products.

For example, a set of oxygen reference values can be developed for a specific fruit in order to allow the system to adjust the oxygen levels in the atmosphere and follow a preset profile over time.

However, these reference values can vary significantly due to various factors.

For this reason, controlled atmosphere cells are used which are provided with control systems capable of performing a dynamic control of the atmosphere, so-called DCA (Dynamic Controlled Atmosphere) cells.

DCA technology allows to control dynamically the atmosphere in a CA cell not on the basis of predetermined reference values but rather on the basis of information that originates from controlling the response of the products to environmental changes.

The response of the stored goods to changes can be determined by characteristics affected by metabolic processes, such as the production of ethanol, chlorophyll fluorescence, and respiration.

One of the most important factors that relate to the atmosphere is respiration.

The respiration of fruit and vegetables can have a significant effect on the levels of oxygen and carbon dioxide in a cell.

Respiration of fruit and vegetables is the natural ripening process that occurs after picking.

Respiration is the absorption of oxygen and the emission of carbon dioxide, just like the human body does during breathing.

It is known to control the respiratory quotient, RQ, within a dynamically controlled atmosphere storage cell, so as to know the actual variations of oxygen and carbon dioxide within the cell.

RQ measurement can be difficult due to the uncertainty of the gas tightness of the cell and due to the addition of N2 gas, in order to reduce the oxygen, or the removal of CO2 gas from external scrubbing systems, which are normal processes associated with the management of many CA cells.

US 2012/0097050 discloses a system for dynamic control of the atmosphere in a cell for the storage of perishable items such as fruit and vegetables that uses a small chamber that is arranged inside the storage cell and in which there is a sample of the items. The chamber remains temporarily closed, without any gas flow, during RQ measurement and for this reason the consumption of oxygen is rapid and total, i.e., it is consumed in 12 hours or less, while part of the CO2 that has formed by anaerobic respiration does not have enough time to exit from the pulp, and this causes an error in the calculation of RQ. CO2 does not have enough time to escape because of the high solubility of CO2 in cellular sap.

Another drawback of the system described in US2012/0097050 is constituted by the fact that it uses a flow of nitrogen, in order to eliminate CO2 when it reaches high values. Due to the high generation cost of nitrogen, the system proposed by US 2012/0097050 is economically disadvantageous.

A further drawback of the system described in US2012/0097050 is constituted by the fact that an imperfect seal of the gas analyzer or of the suction and return pipes can cause the introduction of 02 in the chamber during RQ determination, inducing errors in its calculation.

Another problem of the system described in US2012/0097050 is that the measurement chamber is sealed by means of water, which can alter the internal humidity of the chamber, or can create an environmental condition that is excessively humid with respect to the condition of the CA cell. Also, in case of evaporation of the water, in order to ensure tightness, it would be necessary to top up the water periodically in the sealing channel; however, this addition of water is complicated, because access to the storage cell by personnel is restricted because of the lethal concentration of gas in the CA cell.

Another problem of US2012/0097050 is constituted by the fact that any inclination of the cell might cause the escape of water from the sealing channel and therefore the possible entry of gas of the CA cell, thus altering RQ determination. Also, the CO2 inside the chamber can be solubilized in the water of the sealing channel, altering the content of CO2 in the atmosphere and generating errors in RQ calculation.

WO2013125944 discloses a method and an apparatus for controlling the atmosphere in a cell that contains horticultural products, by means of a determination of RQ in the atmosphere of the entire CA cell. The system described in WO2013125944 requires an almost complete seal of the CA cell; however, the seal of commercial CA cells decreases as the operating time increases and also there are great differences in tightness among the different CA cells. Also, the system described in WO2013125944 requires disconnection from the refrigeration system and from the gas control system of the CA cell for 4 hours, with the consequent drawback of the temporary rise of the temperature of the fruits stored in the CA cell. A further drawback of the system described in WO2013125944 is that it requires measurement of the internal pressure of the CA cell and pressurization of the latter with nitrogen during QR determination, with consequent additional costs for the production of nitrogen and for the system for measuring and adjusting the pressure of the CA cell. Another drawback of the system described in WO2013125944 resides in that an error of the control system might cause an excessive stress to all the fruit stored in the CA cell if RQ measurement is not interrupted after the 4 hours planned for this operation.

WO2011113915 discloses a storage system in which RQ determination occurs in the atmosphere of the entire CA cell. In such system, the 02 level is established as a function of the GERQ (Gas Exchange Rate Quotient) and of the inflow of air in the CA cell. The GERQ and the inflow of air in the CA cell are calculated by means of mathematical models that simulate these phenomena. The GERQ is calculated by using the respiratory quotient and the diffusion of the gases through the pulp of the fruit. The purpose of WO2011113915 is to determine the beginning of anaerobic respiration, in order to avoid it with an increase in the level of oxygen inside the storage cells, so as to maintain only normal (aerobic) respiration with an RQ around 1.0. The system disclosed in WO2011113915 requires the complete tightness of the CA cell. This tightness is calculated on the basis of a mathematical model that establishes the 02 set-point; however, since the variability of the gas tightness of a commercial CA cell is not predictable, the mathematical model can be subject to errors. The tightness of the cells varies as a function of damage to panels and doors, aging of the waterproofing materials, age of the cells, imperfect door closure, movement and cracking of the floor are some among the causes that are difficult to predict. Also, the system described in WO2011113915 requires the injection of nitrogen (scrubbing) for the CO2 absorber.

The aim of the present invention is to provide an apparatus and a method for controlling controlled atmosphere cells, for storing perishable items, that overcome the drawbacks of the cited prior art.

Within the scope of this aim, an object of the invention is to provide an apparatus and a method for storing products by means of dynamic control of the atmosphere, performed by means of the respiratory quotient method, allowing a dynamic variation of the level of oxygen within the cell to a level that does not cause excessive stress to the fruit and allows to produce small quantities of ethanol, so as to reduce ethylene synthesis and respiration, prolonging the storage of the products and maintaining a better quality thereof.

Another object of the invention is to provide an apparatus and a method for storage that allow to reduce the use of fungicides, of growth regulators such as 1-MCP (1-methylcyclopropene) and of diphenylamine to control reheating, thus reducing storage costs and the contamination of the products with chemical products.

Another object is to provide an apparatus and a method that can be used in storage, with dynamic atmosphere control, for various species of fruit and other vegetables.

A further object of the invention is to provide an apparatus and a method that are economically advantageous with respect to the systems known so far.

Another object is to provide an apparatus that allows the automation of cell control operations, allowing a single cell management software to automatically adjust the concentration of 02 therein to a level at which a slight production of ethanol occurs. A minimal and constantly controlled concentration of ethanol within the tissue of the fruit inhibits the synthesis and action of ethylene and increases apple storage efficiency.

A further object of the invention is to provide an apparatus capable of maintaining lower 02 levels with respect to the dynamic atmosphere control methods known so far, with a consequent improvement of product storage.

This aim, these objects and others that will become better apparent hereinafter are achieved by a control apparatus for controlled atmosphere cells for storing perishable items, comprising at least one cell adapted to contain products and at least one chamber arranged inside said cell and adapted to contain a sample quantity of said products; said chamber being isolatable with respect to said cell and being connected to a control device adapted to determine the respiratory quotient of said sample quantity; said apparatus being characterized in that it comprises at least one container arranged inside said cell and connected thereto by a valve means, said container receiving an amount of gas from said cell and being isolatable from said cell; said container being connected to said at least one chamber in order to transmit a flow of said gas into said chamber.

Further characteristics and advantages will become better apparent from the description of preferred but not exclusive embodiments of the invention, illustrated by way of non-limiting example in the accompanying drawings, wherein:

Figure 1 is a schematic view of the apparatus according to the present invention;
Figure 2 is a schematic view of the container of the reference atmosphere;
Figure 3 is a schematic view of the hermetic chamber;
Figure 4 is a chart that plots the RQ in a DCA chamber;

Figure 5 is a chart that plots the RQ in a DCA chamber with Gala apples with a value of 1.2 kPa of CO2 during a period of 30 hours of hermetic closure;

Figure 6 show two charts that plot the variation of the RQ and of the level of 02 in the DCA cell during the storage of Fuji apples with an RQ of 1.5 and an RQ of 2.0;

Figure 7 shows four charts which show the levels of ethanol, acetaldehyde, ethyl acetate and hardness of the pulp of Fuji apples stored in a conventional controlled atmosphere and in a dynamic controlled atmosphere with fluorescence of chlorophyll (HarvesWatch) and a respiratory quotient (RQ) after nine hours of storage and seven days at 20°C;

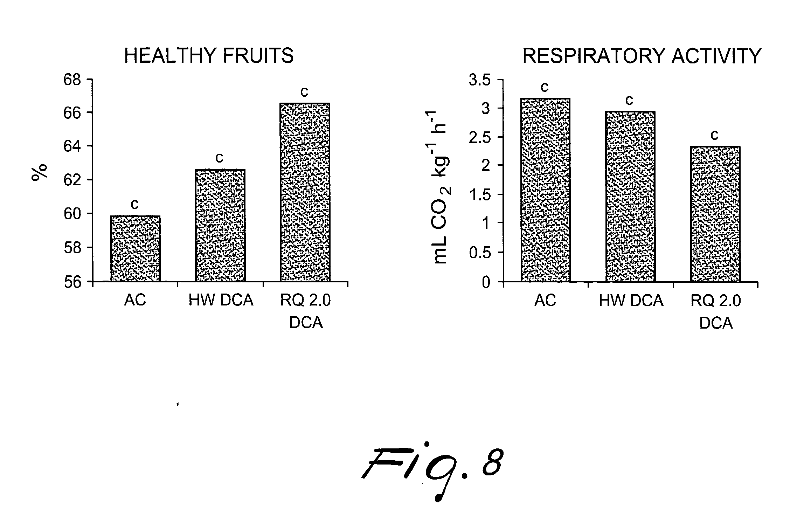

Figure 8 shows two charts that show the conditions of Royal Gala apples after eight months of storage in a Dynamic Controlled Atmosphere at the temperature of 0.5°C, plus 7 days of exposure at 20°C.

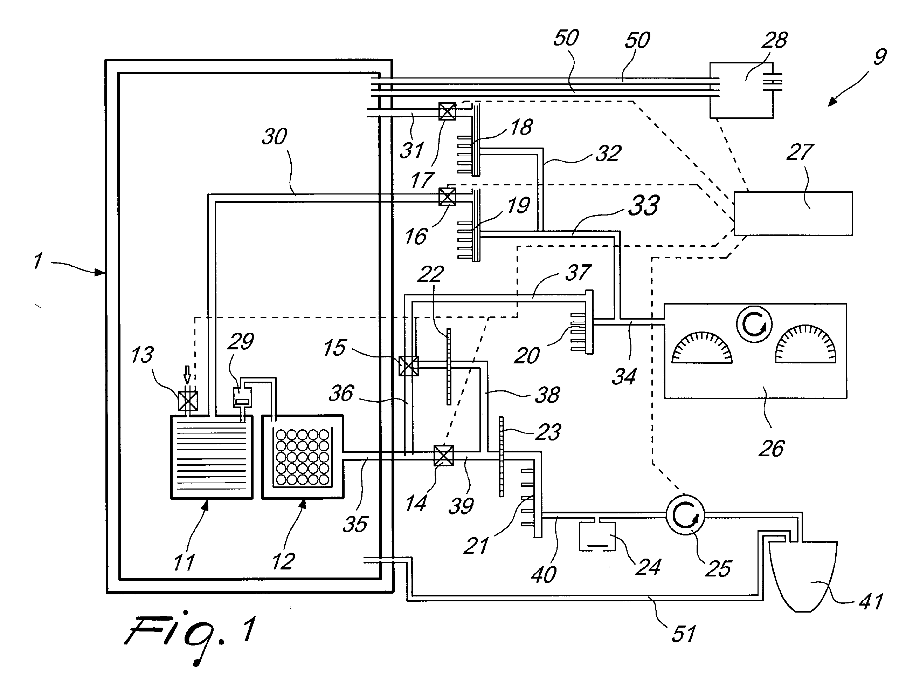

With reference to the cited figures, the apparatus according to the invention has a control device, designated by the reference numeral 9 in Figure 1, that is connected to a reference atmosphere container 11 and to a chamber 12, which are installed within a storage cell 1.

The storage cell 1 may have any volume and does not require total waterproofing, so long as it allows to maintain low concentrations of 02, such as for example 0.2%.

The cell 1 preferably has a CO2 absorber, designated by the reference numeral 28, with a system for automatic injection of CO2, and a buffer volume 41 for balancing the pressure variations of the cell 1.

The reference atmosphere container 11 is made of flexible material 111, such as polyethylene or other flexible polymer, and is impermeable to gases.

The container 11 preferably has a volume of 200 to 300 l or more.

The container 11 is supported, in the upper part, by a rigid frame 112, for example made of metal or other rigid material. This frame 112 allows to mount the container on the rear part of the chamber 12.

The lower part of the container is fixed to a body 113 of adequate weight, the force of gravity of which causes automatic filling of the container 11 with the atmosphere of the storage cell 1, when an intake valve 13, which connects the storage cell 1 to the inside of the container 11, is in the open position.

The container 11 is connected to the chamber 12 through a check valve 29.

Furthermore, the container 11 is connected to a third valve 16, located in the outer part of the cell 1, by means of a tubing 30.

The chamber 12 is constituted by a metallic vessel 121, which can also be made of PVC or of another polymer, with a volume that can vary from 100 l or more.

The device according to the present invention may also include more than one chamber 12 in a cell 1, for example in order to allow to determine the respiratory quotient on different batches of fruit.

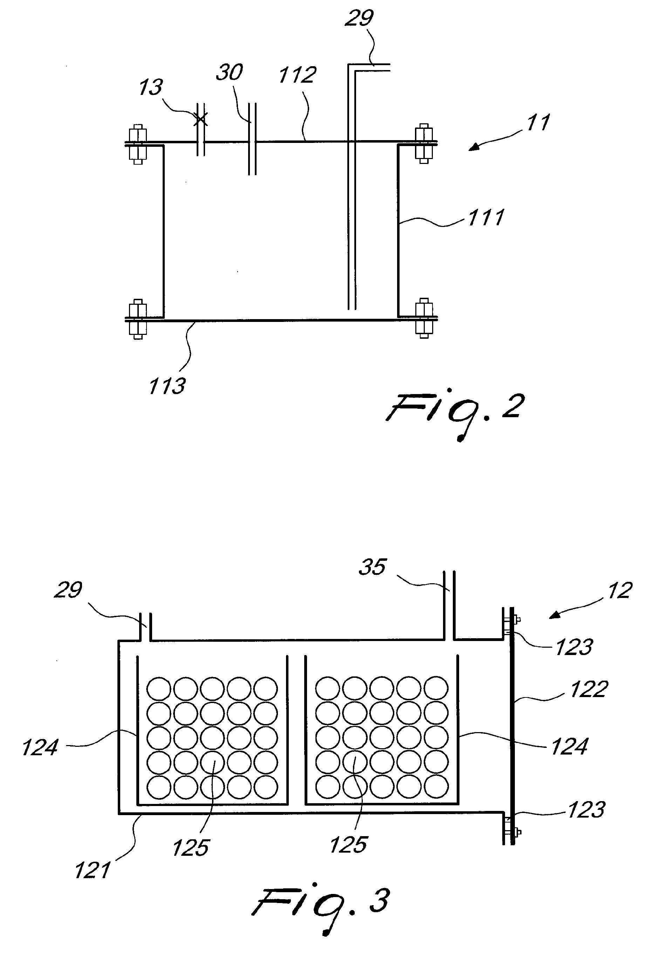

According to the embodiment shown in Figure 3, a front part of the chamber 12 is closed hermetically with a cover 122 made of metallic or acrylic or polycarbonate material.

The seal is provided with a gasket 123 made of rubber or other suitable material.

By means of the pressure of the cover 122, by virtue of hooks or screws, perfect gas tightness is achieved.

In the rear part, in an upper region, the chamber 12 is connected to the container 11 by means of the check valve 29.

A tubing 35 connects the chamber 12 to a first valve 14 and to a second valve 15 of the control device 9.

Crates 124 containing the product 125, for example fruit, are arranged inside the chamber 12.

A first manifold 18 is connected to a fourth valve 17 and to a gas analyzer 26 by means of pipes, designated by the reference numerals 32, 33 and 34.

The first manifold 18 may be connected to optional additional valves of other storage cells, if present, not shown in the drawings.

A second manifold 19 is connected to the third valve 16 and to the gas analyzer 26 by means of the pipes 33 and 34.

Also the second manifold 19 may be connected to additional valves of other storage cells, if present, not visible in the figures.

A third manifold 20 is connected to a second valve 15, by means of the pipe 37, and to the gas analyzer 26 with the pipe 34.

Also the third manifold 20 may be connected to additional valves of further storage cells, if any, not visible in the figures.

A fourth manifold 21 is connected to a first flow-meter 23, on one side, and on the other side is connected, by means of a pipe 40, to a suction pump 25 with the interposition of a vacuum gauge 24.

Also the fourth manifold 21 may be connected to additional valves of other storage cells, if provided, not visible in the figures.

A second flow-meter 22 is installed, together with the first flow-meter 23, externally to the cell 1; both flow-meters have a scale that is graduated from 0 to 10 l/min and allow adequate flow adjustment.

The first flow-meter 23 may be replaced with a flow sensor, which in case of lack of flow of the gas emits an acoustic signal or an electrical signal on a control panel 27, which signals an alarm on a display.

The first flow-meter 23, or the flow sensor, may also be mounted inside the cell 1, but this would entail a more complicated maintenance.

The vacuum gauge 24 has the function of keeping the suction pressure constant, in order to keep the suction flow of the gases unchanged from the chamber 12 or from the various chambers if multiple chambers 12 are present within the cell 1.

The deactivation of some chambers 12 might cause an increase or decrease of the flow in the remaining chambers connected to the control apparatus 9, if an adjustment of the suction pressure in the fourth manifold 21 is not performed. By decreasing the flow of gas that arrives from the chambers, the vacuum gauge opens and suction of part of the gas that flows out from the pump 25 occurs, thus keeping the suction force and the flow of gas from the chambers 12 uniform.

If a suction pump for each cell 1 is used, the vacuum gauge is not required.

The suction pump 25 may be a diaphragm (membrane) pump or a pump of another type, preferably with a flow rate of at least 2 l/min for each chamber 12 connected to the device 9.

It is possible to use a pump 25 for multiple cells 1 or an individual pump for each cell. This pump can be mounted externally to the cell 1, as in the illustrated example, or also inside the cell 1; in this last case, maintenance would be more complicated but one would avoid the use of the pipe for connection to a buffer volume 41, since the gas that would exit from the pump 25 would return automatically to the cell 1.

If the pump is mounted inside the cell 1, it is convenient to replace the flow-meter 23 with a vacuum gauge, since visualization and adjustment of the flow-meter would be more difficult.

The gas analyzer 26 allows to detect and measure the $O_2$ and $CO_2$ gases.

Preferably, the analyzer is a high precision and high accuracy unit and displays the readout value with a minimum of two decimals for both gases, allowing correct determination of the respiratory quotient.

Moreover, the gas analyzer 26 is provided with an air pump to draw samples of gas from the chamber 12 and from the container 11 of the reference gas.

The electronic control panel 27 has the function of coordinating the opening of the valves 13 to 17, the actuation of the pump 25 and the operation of an absorber 28, as a function of the preset parameters, i.e., the respiratory quotient, the RQ determination time, the set-point of $O_2$ and $CO_2$, of each cell 1.

The absorber 28 is connected to the cell 1 by means of two independent pipes 50 and constitutes a $CO_2$ absorber and $O_2$ injector.

In particular, the absorber 28 has an adequate capacity in order to allow the elimination of $CO_2$ at adequate levels for each cultivar of apples or other fruit and must prevent substantial quantities of $O_2$ (air) from being introduced in the cell as a consequence of the regeneration of the activated carbon, since this would compromise the keeping of low levels of $O_2$ (proximate to 0.2%) in the cell 1.

The absorber 28 is provided with a device for introducing air ($O_2$) in the cell 1; such device operates according to the need, in order to correct the values of $O_2$ of the cell 1; these values are calculated and maintained by the software on the basis of the determination of the value of RQ.

The check valve 29 opens only in the direction from the container 11, toward the chamber 12, and automatically closes in the opposite direction, in order to prevent return of the gases from the chamber toward the container. The check valve 29 is required if the RQ determination is performed without flow of gas (static type) during the period of exclusion of the chamber 12, in order to allow the accumulation of $CO_2$ and the reduction of the level of $O_2$ in the chamber.

When the RQ determination is performed with a low flow of gas (dynamic type), i.e., 0.1 l/min -1, the check valve 29 is superfluous.

The pipe 40 is preferably made of flexible and resistant polymeric material, with an inside diameter of no less than 10 mm.

The buffer volume 41 constitutes a flexible store of gas and is connected to the cell 1 by means of a pipe 51.

The buffer volume 41 has the function of compensating the partial vacuum and positive pressure of the cell 1 in order to avoid the inflow of air ($O_2$) when, as normally occurs, the gas tightness of the cell 1 is not total.

The gas that arrives from the suction pump 25 can be recovered and sent to the buffer volume of the cell 1. This recovery of the gas that arrives from the pump 25 is a special feature.

The control device 9 has, in the electronic control panel 27, a software that controls the solenoid valves, the suction pump 25 and the absorber 28, so as to maintain the cell 1, and any other cells connected to the control panel 27, at a level of $O_2$ that allows low anaerobic respiration and is monitored by means of the RQ of the fruits stored in the chamber 12.

All the valves are preferably 24 volt valves. The valves 13 and 14 can be NO ("normally open") or NC ("normally closed"), with an inside diameter of 10 mm, the valves 16 are NC ("normally closed") and the valves 17 are NC ("normally closed"), while the second valve 15 is of the three-way type, being NO ("normally open") on the pipe 36 in the direction of the flow-meter 22 and NC ("normally closed") on the pipe 36 in the direction of the pipe 37. The valves 15, 16 and 17 preferably have an inside diameter of 0.5 cm or more.

Each cell 1 has a chamber 12 that contains a sample of product 125, for example fruit, that is representative of the content of the cell 1. In order to monitor the anaerobic respiration through RQ determination, the control panel 27 performs the following steps.

Step 1: isolation of the container 11 and chamber 12 for a period from 24 to 36 hours.

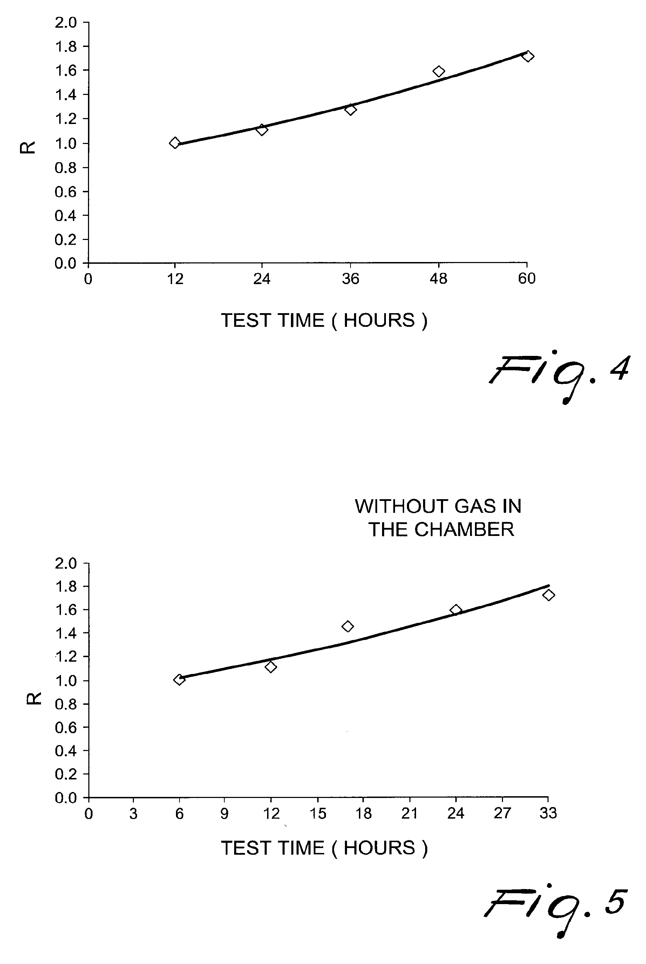

Periodically, (3-10 days), a measurement of the RQ of the chamber 1 and of the other chambers connected to the device 9 is performed. The interval between one determination and the next can be modified by means of the software of the control panel 27 as needed. In order to determine the RQ of the cell 1, the control panel 27 reduces the flow of the chamber 12 for a period of 24 hours or more, electrically actuating (closing) the valves 13 (NO) and 14 (NO) so that the container 11 is isolated from the cell 1. In this manner, the gas stored in the container 11 is used to maintain a small flow for the chamber 12, during the 24 hours of isolation, and furthermore the gas of the store will be used as reference gas at the end in order to determine the RQ. The gas of the container 11 flows through the check valve 29, the chamber 12, the tubing 35, the second valve 15, the flow-meter 22, the pipes 38 and 39, the flow-meter 23, the fourth manifolds 21, the pipe 40, the suction pump 25 and the buffer volume 41. The flow-meter 22 is adjusted for a flow of 0.1-0.2 l/h -1. This low flow of gas through the chamber allows a slow reduction of the level of $O_2$ and an increase in the level of $CO_2$ that allows a correct determination of RQ. The low flow allows the RQ, calculated for a longer period (24 hours), to be more representative of the actual anaerobic respiration of the fruits of the cell 1, since $CO_2$ requires a certain time to be released from the inside of the pulp of the fruits, with the result that in the first 6-10 hours of measurement the RQ remains close to 1, as shown in the chart of Figure 4. It is also possible to use a total interruption of gas (static system) for the chamber 12; however, in this case the isolation time of the container 11 and of the chamber 12 and RQ determination must be shorter, approximately 12-14 hours, since with a longer period there would be an excessive reduction of the oxygen (less than 0.1 %) that might cause fermentation of the fruits, with irreversible damage to the tissues. During the period of isolation of the chamber 12, the control panel 27 can also isolate other chamber and at the same time continue to control the cells 1 of the device 9, determining the levels of $O_2$ and $CO_2$ and correcting the values of the cells on the basis of the preset gas set-points.

Step 2: determination of $O_2$ and $CO_2$ of the chamber 12.

After 24 hours or more, the control panel 27 electrically actuates the second valve 15, which allows a flow of gas in the direction of the pipe 36, through the pipe 37, the third manifold 20, the pipe 34 and the gas analyzer 26. The valves 13 and 14 remain closed. Once the concentration of $O_2$ and $CO_2$ of the chamber 12 has been determined, the control panel 27 opens the second valve 15 to allow a flow through the pipe 36 and 38 so that the suction pump 25 maintains a flow of gas of 0.1-0.2 l/h -1 for the chamber 12.

Determination of the level of $O_2$ and $CO_2$ can also be performed without a flow of gas from the chamber 12 (static system), but in this case the isolation time must be 12-24 hours at most.

Step three: determination of $O_2$ and $CO_2$ of the container 11.

The container 11 has the main purpose of maintaining a reserve of gas that acts as reference in determining the consumption of $O_2$ and the production of $CO_2$ of the fruits stored in the chamber 12, thus improving precision in determining the RQ.

Since gas analyzers are subject to reading oscillations in reading long periods, as a function of the electrical current, temperature and internal pressure, a determination of the levels of $O_2$ and $CO_2$, performed at the beginning of the isolation of the chamber 12 from the cell 1, and the redetermination of the values after 12-24 hours or more, might entail an error of the gas levels, as a function of the oscillation in the readings of the analyzer, over a period of 24 hours or more, and thus create errors in the RQ calculation.

On the contrary, according to the present invention, the values of $O_2$ and $CO_2$ of the chamber 12 and of the container 11 are determined over a period of time of a few minutes, therefore the error can be minimized or even eliminated. Also, the reserve of reference gas in the container 11 allows to repeat the RQ determination a few times, in order to increase the precision of the determination, because it would not be possible to repeat the RQ determination, without the reserve of reference gas.

In order to determine the values of $O_2$ and $CO_2$ of the container 11, the control panel 27 actuates (opens) the third valve 16, allowing the gas of the container 11 to flow through the tubing 30, the second manifold 19, the pipe 33 and 34, up to the gas analyzer 26.

Preferably, the container 11 has a gas volume that is sufficient to maintain a flow of 0.1-0.2 l/min for more than 24 hours in order to allow one or more determinations of the values of the gases. Due to its elasticity, the container 11 decreases in volume as the gas is aspirated by the pump 25.

Step 4: RQ calculation

After the determination of the values of 02 and CO2 of the chamber 12 (step 2) and of the container 11 (step 3), the software calculates the RQ by means of the following equation:

$$RQ = product\ CO2\ /\ consumed\ O2 = (chamber\ CO2 - store\ CO2)\ /\ (store\ O2 - chamber\ O2)$$

Step 5: comparison of calculated RQ and RQ set-point

The 02 and CO2 set-point of the cell 1 and of any other cells is recorded in the software of the control panel 27. The CO2 set-point can remain constant throughout the storage period, but it can also be changed if, in the future, research reveals advantages in the storage of horticultural products from its modification.

The initial set-point of the oxygen, which is approximately 0.5% 02, is recorded in the software at the time when the cell 1 is closed, and is then modified automatically by means of the control panel 27 by 0.01 every 3-10 days as a function of the RQ calculated by the system. When the desired RQ (RQ set-point) is reached, the apparatus performs small subsequent increases or decreases of the 02 set-point of the cell 1, modifying the value with variations by 0.01%, thus maintaining a given balance in maintaining the 02 concentration of the cell 1.

However, for example for apples, in order to maintain the same RQ (set-point) throughout the storage period, it is necessary to reduce the 02 value in the first months of storage. This is done by means of the software of the device 9, which slowly, constantly and automatically modifies the set-point of 02 of the cell 1, as the function of the determinations of the RQ during the storage.

Step 6: correction of the 02 set-point of the cell 1.

If the RQ calculated in the chamber 12 is lower than the set-point of the cell 1, the apparatus reduces the 02 set-point by 0.01%; however, if the calculated RQ is greater than the set-point of the chamber 1, the software increases the 02 set-point by 0.01%. This 02 set-point variation can be modified with the software as needed. At the beginning of the storage period the corrections may be greater (0.02-0.03% of 02); however, when the oxygen level of the cell 1 approaches the desired RQ (for example 1.5), corrections are by 0.01% 02.

Step 7: normalization of the flow for the container 11 and the chamber 12.

After the RQ calculation and modification of the 02 set-point of the cell 1, the control panel 27 ends the isolation of the container 11 and of the chamber 12, opening the valves 13 (NO) and 14 (NO) with the goal of maintaining a constant flow of gas of 2-3 l/min from the cell 1 through the intake valve 13, the container 11, the valve 29, the chamber 12, the tubing 35, the valve 14 (NO), the pipe 39, the flow-meter 23, the fourth manifold 21, the pipe 40 and finally the suction pump 25. By opening the valve 13, the container 11 automatically expands with the gas that arrives from the cell 1. The heavy body 113 of the container 11 causes an automatic filling of the flexible container 11, by gravity. Now, with a higher flow of gas in the chamber, in a few minutes the atmosphere in the chamber reaches the same concentrations of 02 and CO2 of the cell 1.

Step 8: determination and correction of 02 and CO2 on the basis of the set-point of the cell 1.

The control panel 27 electrically actuates the fourth valve 17 and this normally closed (NC) valve opens, by being energized electrically, allowing the flow of gas from the cell 1 to the pipe 31, the fourth valve 17, the pipe 32, 33 and 34, to the gas analyzer 26.

The control panel, once the value of 02 and CO2 has been determined, activates the absorber 28 as a function of the set-point of CO2, preset for the cell 1, and the air (02) injection valve, as a function of the set-points of 02, preset for the cell 1. Subsequently, the control panel analyzes the successive cells 1 in sequence, maintaining the preset set-point values, in a similar manner. During the analysis of 02 and CO2 in the cell 1, and in any subsequent cells connected to the control device 9, the control panel 27 keeps the valves 13 (NO) and 14 (NO) open and keeps the pump 25 in operation, with the goal of maintaining a constant flow of gas of 2 or 3 l/min from the cell 1 through the valve 13, the container 11, the check valve 29, the chamber 12, the tubing 35, the valve 14 (NO), the pipe 39, the flow meter 23, the fourth manifold 21, the pipe 40 and finally the suction pump 25.

The gas that exits from the pump 25 can be discharged into the buffer volume 41, so that it can be useful to the cell 1, in case of negative pressure therein. This gas can also be directed from the outlet of the pump 25 for return into the chamber 12 during the step for determining RQ (tubing visible in the figures). However, during ventilation of the chamber 12 with the gas of the cell 1, the gas that flows out of the pump is directed to the buffer volume 41. The flow of the gas for the chamber 12 is permanent in order to avoid an accumulation of $CO_2$ or a reduction of the value of $O_2$, since it is desirable for the values of these two gases in the chamber 12 to be kept equal to the values of the gases of the cell 1.

The vacuum gauge 24, connected to the pipe 40, maintains a constant suction partial vacuum in the chamber 12, arranged within the cell 1, and in any other chambers installed in the additional cells 1 connected to the control device 9.

In order to determine the RQ, a constant partial vacuum in the system prevents flow variations in the different chambers as a function of the isolation for 24 hours of one or more containers and chambers. The simultaneous isolation of one or more chambers would lead to a variation in the intensity of the suction of the pump 25 in the additional chambers not isolated from their respective cell 1. In order to neutralize this effect, the vacuum gauge 24 opens and aspirates a small amount of the gas that flows from the pump 25, thus keeping constant the suction intensity and the flow of gas (2-3 l/min -1) in all the chambers that have not been isolated.

Step 9: determining and correcting $O_2$ and $CO_2$ in the additional cells connected to the control device 9.

After correcting the levels of $O_2$ and $CO_2$ in the cell 1, the control panel acts on another cell 1 in order to correct the gas values on the basis of the set-point. Also, the control panel may isolate the container 11 and the chamber 12 in order to determine the RQ of this additional cell (not visible in the figures). For a single cell, the interval between one determination and the other of RQ can vary from 3 to 10 days. In the first month of storage, the rate must be higher and can be reduced later. The time between one RQ determination and the other must be set in the software of the control panel.

The steps of the control system according to the present invention can be summarized as follows:

isolation of the container 11 and of the chamber 12 from the CA cell 1 for 24-36 hours;
determination of the values of $O_2$ and $CO_2$ of the chamber 12;
determination of the values of $O_2$ and $CO_2$ of the container 11;
calculation of the RQ;
comparison of the calculated RQ and of the RQ entered as set-point;
correction of the value of the set-point of the oxygen;
normalization of the flow for the chamber 12;
determination and correction of the values of $O_2$ and $CO_2$ in accordance with the set-points of $O_2$ and $CO_2$;
determination and correction of the values of $O_2$ and $CO_2$ of any additional cells connected to the control device 9.

In practice it has been found that the invention achieves the intended aim and objects, providing an apparatus for controlling controlled atmosphere cells by determining the respiratory quotient of the products contained therein, which solves many problems and offers considerable advantages with respect to prior art control systems.

Dynamic atmosphere control, performed by means of the RQ method, allows a dynamic variation of the level of oxygen inside the cell to a level that does not cause excessive stress to the fruit but allows the production of small quantities of ethanol that reduce the synthesis of ethylene and respiration, prolonging the storage of fruit and maintaining a better quality.

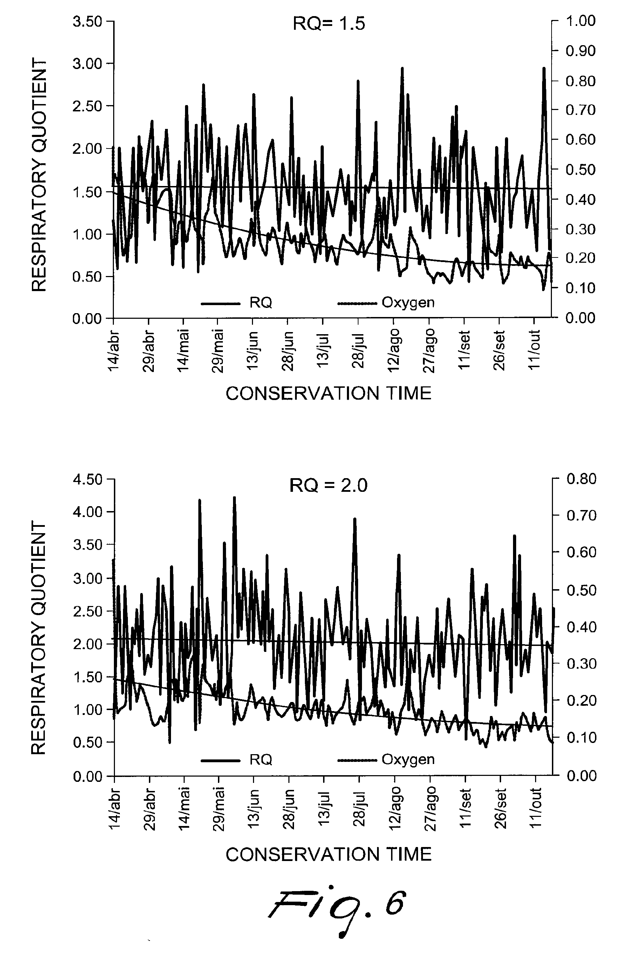

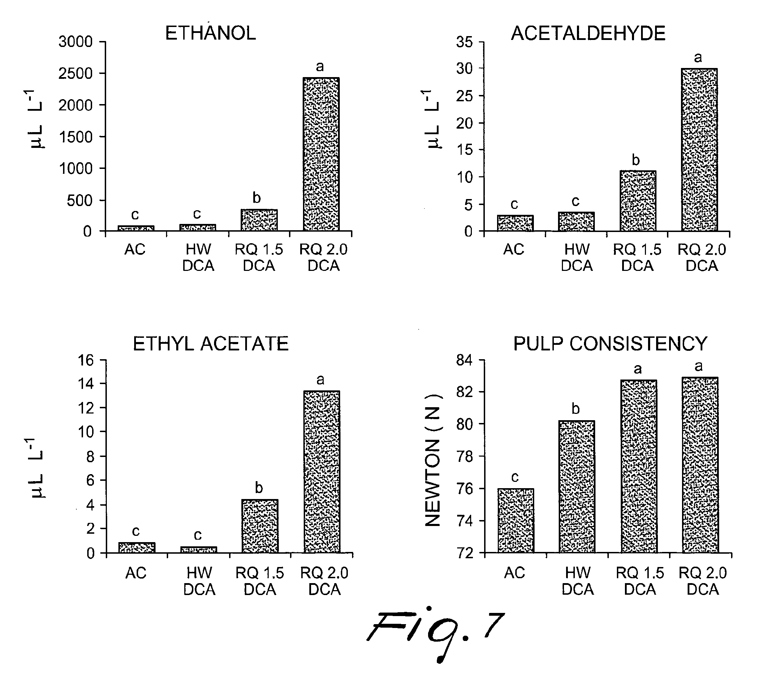

The best quality of the fruits is obtained by maintaining a better consistency of the pulp, which thus allows an increase in the percentage of healthy fruits, as shown in the charts of Figures 6 and 7, with respect to a conventional controlled atmosphere or a dynamic atmosphere control performed according to the prior art.

As a consequence of the reduction of rotting, of physiological diseases and of the slowing of fruit ripening, storage with dynamic atmosphere control with the RQ method can reduce the use of fungicides, of growth regulators such as 1-MCP (1-methylcyclopropene) and diphenylamine for heating control, thus reducing storage costs and the contamination of fruits with chemical products.

The system according to the present invention can be used in storage, with dynamic atmosphere control, for various kinds of fruit and other vegetables.

The apparatus according to the present invention is economically advantageous, since it requires only a gas tank, a chamber and five solenoid valves for each cell; the gas analyzer may be the same one used for controlling the conventional controlled atmosphere values and the software can be one, both for the RQ determination and for the automatic control of the values of gas (02 and CO2) of a group of cells that can reach 20 or more units.

The present invention allows the automation of cell control, allowing a single cell management software to automatically adjust the concentration of 02 therein to a level at which a slight production of ethanol occurs. A minimum and constantly controlled concentration of ethanol, within the tissue of the fruit, inhibits synthesis and the action of ethylene and increases the efficiency of apple storage.

The apparatus according to the present invention can be used to maintain 02 levels that are lower than the dynamic atmosphere control methods used so far, and this improves the storage of apples and of other fruits.

The present invention uses a chamber with a permanent gas flow even during the RQ determination, differently from US2012/0097050, which describes a chamber that remains temporarily closed without any gas flow. Since there is no gas flow, in the chamber, the oxygen consumption is rapid and complete (total consumption in 12 hours or less) and part of the CO2 that has formed through anaerobic respiration does not have enough time to escape from the pulp, and this causes an error in the RQ calculation. The fact that the CO2 does not have enough time to escape is due to the high solubility of CO2 in cell sap. The permanent flow of gas through the fruits allows the QR to be determined over a longer period (24 hours or more) without causing damage to the fruit, although the possibility is also provided to determine RQ without the flow of gases through the chamber 12; however, in this case the isolation time of the chamber must be shorter (12-24 hours).

The present invention seeks to determine anaerobic respiration because the forming of slight levels of ethanol and acetaldehyde delays ripening and causes some physiological disorders. According to the present invention, a balance is also provided between normal (aerobic) respiration and anaerobic respiration (fermentation), and therefore the RQ is between 1.3 and 2 for apples and 4.0 for persimmons.

On the contrary, US 2012/0097050 seeks to determine the beginning of anaerobic respiration in order to avoid it, with an increase in the level of oxygen inside the storage cells, so as to maintain only normal (aerobic) respiration with an RQ around 1.0.

According to the present invention, the optimum levels of RQ for apples have been determined by means of tests, as shown in figures 6 and 7.

The present invention ensures higher precision in the RQ determination, by using a reference gas accumulated in the container 11. In every RQ determination, the system analyzes a sample of gas from the store 11 (figure 11) and instantaneously compares it with the values of 02 and CO2 of the chamber, avoiding errors in RQ determination arising from slight reading variations of the analyzer over time. Variations of 02, of plus or minus 0.1%, may alter the value of RQ, for example, respectively from 1 to 1.5 and from 1 to 3.0. The same effect occurs with a variation of the value of CO2. At the time of 02 and CO2 determination of the chamber 12, the gas of the container 11 is also analyzed. After determining the concentration of 02 and CO2 of the chamber, the system can perform a new reading of the reference gas of the container 11 and of the chamber 12 for an even more exact determination of the RQ, or can perform as many determinations as are necessary to achieve high precision of the value of RQ.

In order to modify the 02 level in the chamber 12, the injection of 02 or N2 is not necessary, as instead provided in US2012/0097050, so that the RQ is close to 1.0. The present invention provides only determination of RQ, and when the RQ is above the set-point of RQ of cell 1, the set-point of 02 is raised automatically to 0.01 and it is not necessary to act on the gases of the chamber 12. The increase of the 02 set-point seeks to reduce fermentation, not to avoid it, as instead described in US2012/0097050.

In the case of very high CO2 in the cell 1, the present invention provides an activated carbon absorber for its absorption, since elimination with a flow of N2, according to what is described in US2012/0097050 for example, would be economically unfeasible, on a commercial level, due to the high cost of nitrogen generation.

Also, differently from US2012/0097050, in the present invention it is not necessary to eliminate the CO2 from the chamber 12 with a flow of nitrogen, because the CO2 is already eliminated by the permanent flow of gas that arrives from the cell 1.

The RQ determination time can be longer (24 hours or more), because with a constant flow of gas from the container 11 for the chamber 12, there is no very rapid consumption of 02 and no very rapid accumulation of CO2, and this gives time for CO2 to be released from the inside of the fruits for a better RQ determination. The CO2 is produced by the tissue of the pulp inside the fruit and therefore the RQ determinations over short periods are not precise. The RQ determination in just six minutes after closure of the cell is not possible, as described in US2012/0097050, because the CO2 that forms inside the fruit requires much more time to reach the external atmosphere. This delay is due to the high solubility capacity of CO2 in cell sap, which therefore delays its escape from the fruit.

The present invention allows the determination of the RQ after 24 hours or more, a period in which there is a better adaptation of the fruits to a slower reduction of the level of 02 and to the accumulation of CO2, therefore avoiding an excessive increase in stress. Frequent exposures of the fruits of the chamber 12 to a much higher stress than what occurs within the commercial cell 1 causes the fruits to have a ripening process that is different with respect to the ones stored in the cell 1 and therefore the sample in the chamber 12 is no longer representative of the fruits of the cell 1.

There is no inflow of gas from the cell 1 to the chamber, if the chamber has tightness problems, because during the period of isolation of the chamber 12 for the RQ determination, there is a slight flow of gas that arrives from the container 11 and the pressure variations in the cell 1 are compensated by the flexible container 11. The cell 1 is provided permanently with alterations in the concentration of 02 and CO2 as a function of fruit respiration, of CO2 absorption and injection of air (02) by the cell control system. Also, there is a continuous pressure variation within the CA cell as a function of the absorption of CO2, defrosting of the evaporators, air injection and modification in the temperature of the atmosphere of the cell. Therefore, a compensation of the pressure in the chamber 12 of the container 11 due to the flow of gas avoids the inflow of the gases of the cell 1 into the chamber 12, if the chamber is not perfectly tight, during RQ determination, thus avoiding errors in RQ calculation. During RQ determination, the cell 1 can operate normally, actuating the refrigeration system, performing defrosting or absorbing CO2 and injecting 02.

In the present invention, the control system allows to perform various readings of the levels of gas (02 and CO2) in the chamber over 24 hours or more in order to follow the evolution of the RQ and use it in the calculation of the correction of the value of 02 in the cell 1 in order to maintain a balance between normal (aerobic) respiration and anaerobic respiration. RQ determinations every 6 hours during the 24 hours of isolation of the chamber 12 allow the control device 9 to have higher precision in RQ calculation.

During RQ determination, the chamber 12 does not go into partial vacuum, since it is supplied with gas from the container 11 and therefore there is no need to return the gas measured by the gas analyzer 26 to the chamber 12, as instead must be done in the system described in US2012/0097050.

An imperfect seal of the gas analyzer 26 or of the suction and return pipes could introduce 02 in the chamber 12 during the RQ determination, inducing errors in calculating it; such errors are prevented in the present invention.

Differently from US2012/0097050, in which the chamber uses water as a sealing system, the present invention does not require a seal of the chamber 12 with water. The water alters the internal humidity or creates an excessively humid environmental conditions with respect to the condition of the cell 1. In other words, since the fruits of the sample represent the total of the cell, they should remain in a condition that is identical to that of the cell.

Differently from US2012/0097050, in the present invention there is no problem of lack of tightness of the chamber due to evaporation of the water in the water sealing system. Although the humidity of the cell is high, there is in fact always the evaporation of the water of the sealing channel, which would have to be topped up periodically. However, this addition of water is complicated because personnel access is restricted due to the lethal concentration of gases within the cell.

In the apparatus of the present invention, a tilt of the chamber does not entail any problem, because water is not used for the seal. On the contrary, in US2012/0097050, if the chamber is tilted, the exit of water from the sealing channel changes the seal of the chamber, allowing the entry of gas of the cell and thus altering the RQ determination. CO2 inside the chamber can solubilize in the water of the sealing channel, altering the content of the CO2 in the atmosphere and generating errors in RQ calculation.

According to the present invention, there is no need for a fan inside the chamber because the permanent flow of gas renders its atmosphere uniform. US2012/0097050 instead requires a fan.

The present invention provides only for the use of a solenoid valve without the installation of a fan in the chamber 12, installed within the cell 1. This facilitates correct operation and maintenance. One must in fact consider that in case of malfunction access for repairs is rendered difficult due to the lethal composition of the atmosphere of the cell 1.

In the present invention there is no problem in opening the chamber 12 after the RQ determination. Even in case of malfunction of the control panel 27 in opening of the chamber 12, the valves 12 and 13 in any case open automatically, thus allowing a normal flow in the chamber and preventing the total consumption of 02 and an excessive fermentation of the fruits.

If necessary, the intensity of the flow of gas in the chamber 12 can be permanently observed and controlled from the outside of the CA cell 1.

The use of two or more chambers in a cell allows to determine the RQ of the samples of different batches of fruit of the cell with a single analysis of the reference gas of the container 11.

In case of suspected leaks, it is possible to perform a tightness test of the chamber 12 and of the container 11 during the storage period from the outside of the cell 1, with pressurization of the chamber 12 and of the store 11. In US 2012/0097050 this is not possible, because the seal through the film of water does not allow pressurization.

The apparatus according to the present invention does not require pressure compensation in the chamber 12 because the chamber is always under a slight overpressure by virtue of the constant flow of gas.

The chamber 12 does not require a pipe to eliminate the excess gas when O2 and N2 are injected because, in the present invention, the addition of gas in the chamber 12 is not provided, differently from what is described in US2012/0097050.

The electronic system for determining the RQ and controlling the levels of 02 and CO2 of the CA cell can be applied to a large number of cells (>40) by virtue of the large interval (24 hours) between consecutive readings, which is not possible in the system described in US2012/0097050 that requires to perform a RQ determination every 6 minutes.

The RQ is never lower than 0.95, as indicated in US2012/0097050, unless there is a loss of tightness in the chamber 12.

The present invention begins the RQ determination with concentrations of 02 and CO2 that are proximate to the daily average, differently from US2012/0097050, which begins the RQ determination with any percentage of 02 and CO2. During the day, variations of 02 and CO2 in the cell 1 occur owing to the consumption of 02 and the production of CO2 for respiration of the fruits and injection of air or absorption of CO2 in the cell, generated by the control panel 27. In the present invention, the gas of the cell initially enters the container 11, where it mixes with a volume of 200 to 300 liters of stored gas. After this, this mixture of gases is sent into the chamber 12, where the fruits are located. For example, if there has been a variation of the 02 from 0.20 to 0.35% in the cell 1, following a correction performed by the control panel 27 the concentration of 02 in the gas container 11 varies instead only from 0.25 to 0.30%. In this manner there are no sharp variations in 02 and CO2 in the gas that enters the chamber 12, since the container 11 acts as a buffer. In all RQ determinations, the process begins with a concentration of 02 and CO2 that is proximate to the average percentage of the cell 1.

The present invention offers various advantages also with respect to the system described in WO2013125944.

The present invention provides for an RQ determination only in one or more chambers accommodated within a cell, whereas, in WO2013125944, the RQ determination is provided in the atmosphere of the entire cell.

In the present invention, in order to determine the RQ of the fruits, there is no need for an almost complete seal of the cell because the RQ is determined in a hermetically closed chamber. The seal of commercial cells in a controlled atmosphere decreases with the time of use and also there are great differences in tightness among the various cells.

In the present invention, during the RQ determination, disconnection from the refrigeration system and from the gas control system of the CA cell is not required, whereas in WO2013125944 there is one for four hours.

The fact of not disconnecting from the refrigeration system avoids the temporary increase of the temperature of the fruit stored in the CA cell.

In the present invention, differently from WO2013125944, measurement of the internal pressure of the cell and pressurization thereof with nitrogen during the QR determination are not necessary; in this manner, the cost of the production of this gas and of the system for measurement and adjustment of the pressure of the CA cell is reduced.

The present invention allows the RQ determination over a longer period, of 12 hours (without gas flow in the chamber 12) or of 24 hours or more (with flow of gas in the chamber 12), instead of 4 hours as in WO2013125944. A longer period of isolation of the cell improves the efficiency of the RQ determination because the CO2 produced with an aerobic respiration of the fruit requires a few hours to be in equilibrium with the CO2 dissolved in the cellular sap of the pulp, to be then released into the atmosphere of the cell.

According to the present invention, it is not necessary to calibrate the analyzers of 02 and CO2 in all the RQ determinations, because the present invention uses a gas store with a reference gas, which is analyzed at the beginning and at the end of the period of closure of the chamber and the RQ is calculated with the variation of concentration of 02 and CO2 in the chamber in relation to the reference gas of the store, preventing oscillations in the reading of the analyzers over time from interfering with the efficiency of the 02 and CO2 determination and consequently of RQ.

In WO2013125944, an error in the control system might cause an excessive stress to all the fruit stored in the CA cell if RQ measurement is not interrupted after the 4 hours prescribed for this action. In the present invention, in case of error, only the fruit of the chamber 12 can be damaged, avoiding damage to the fruit of the cell 1.

The gas tank of the present invention keeps the initial percentages of 02 and CO2 more constant among the various RQ determinations. In WO2013125944, the initial levels of 02 and CO2 can vary greatly from one determination to another, because on a given day the QR determination might begin immediately after correction of the levels of 02 and CO2 of the cell by the automatic control panel while on another day the RQ determination might begin directly before this correction. This causes the RQ determination to begin with different levels of 02 and CO2, and this modifies RQ from one day to another and therefore leads to errors in its determination.

The present invention offers various advantages also with respect to the system described in WO2011113915.

The present invention provides for the RQ determination in one or more chambers accommodated in a CA cell, while WO2011113915 provides for RQ measurement in the entire CA cell.

In the present invention, the level of 02 in the CA cell is established only as a function of RQ, whereas in WO2011113915 the level of 02 is established as a function of the GERQ (Gas Exchange Rate Quotient), and of the air that has entered the cell. The GERQ and the air that have entered the cell are calculated by means of mathematical models that simulate these phenomena. GERQ is calculated by using the respiratory quotient and the diffusion of the gases through the pulp of the fruit.

The present invention seeks to determine and utilize the anaerobic respiration in storage, because the forming of slight levels of ethanol delay ripening and causes some physiological disorders. Since it also provides for a balance between normal (aerobic) respiration and anaerobic respiration (fermentation), the RQ should be between 1.3 and 2.0 for apples and 4 for persimmons. The optimum levels of RQ for apples have been determined by means of tests, illustrated in figures 6 and 7.

On the contrary, WO2011113915 seeks to determine the beginning of anaerobic respiration in order to avoid it with an increase in the level of oxygen within the storage cells, so as to maintain only normal (aerobic) respiration with an RQ around 1.0.

The present invention provides for the RQ determination every 3-10 days, whereas WO2011113915 continuously determines the GERQ.

In the present invention, the lack of tightness in the cell 1 does not influence the correct determination of the RQ, whereas in WO2011113915 the seal is calculated on the basis of a mathematical model that establishes the set-point of 02, but since the variability of the gas tightness of a commercial controlled atmosphere cell is not predictable, the mathematical model can be subject to calculation errors. The seal of the cells varies as a function of damage to panels and doors, aging of the waterproofing materials, age of the cells, imperfect closure of doors, movement and cracking of the floor; those are some of the causes that are difficult to predict.

In the present invention, it is not necessary to calibrate the 02 and CO2 analyzers in all RQ determinations, by virtue of the presence of the container with reference gas, which is analyzed at the beginning and at the end of the period of closure of the chamber. The RQ is calculated with the variation in concentration of 02 and CO2 in the chamber in relation to the reference gas of the store, preventing oscillations in the reading of the analyzers over time from interfering with the efficiency of the determination of 02 and CO2 and consequently of RQ.

In the present invention, the use of two or more chambers in the same CA storage cell allows to determine the RQ of samples of the different batches of fruit in the cell. In this manner, the level of 02 of the cell can be adjusted as a function of the most problematic batches of this cell.

In the present invention, the CO2 absorber does not require injection of nitrogen (scrubbing), whereas in WO2011113915 the CO2 absorber requires this injection.

**Claims**

1. A control apparatus for controlled atmosphere cells for storing perishable items, comprising at least one cell (1) adapted to contain products (125) and at least one chamber (12) arranged inside said cell (1) and adapted to contain a sample quantity of said products (125); said chamber (12) being isolatable with respect to said cell (1) and being connected to a control device (9) adapted to determine the respiratory quotient of said sample quantity; said apparatus being **characterized in that** it comprises at least one container (11) arranged inside said cell (1) and connected thereto by a valve means (13), said container (11) receiving an amount of gas from said cell (1) and being isolatable from said cell (1); said container (11) being connected to said at least one chamber (12) in order to transmit a flow of said gas into said chamber (12).

2. The apparatus according to claim 1, **characterized in that** said container (11) is a variable volume container (11).

3. The apparatus according to claim 2, **characterized in that** said container (11) comprises at least one deformable wall.

4. The apparatus according to claim 1, **characterized in that** it comprises a CO2 absorber (28) with an automatic 02 injection system, a buffer volume (41) for balancing pressure variations of said cell (1), and a gas analyzer (26).

5. The apparatus according to claim 1, **characterized in that** said container (11) is connected to said chamber (12) by means of a check valve (29); a tubing (35) connecting said chamber (12) to a first valve (14) and to a second valve (15) of said control device (9); a first manifold (18) being connected to a fourth valve (17) and to a gas analyzer (26); a second manifold (19) being connected to a third valve (16) and to said gas analyzer (26); a third manifold (20) being connected to a second valve (15) and to said gas analyzer (26); a fourth manifold (21) being connected at one end to a first flow-meter (23) and at the other end to a suction pump (25) with the interposition of a vacuum gauge (24); a second flow-meter (22) being installed, together with said first flow-meter (23), outside of said cell (1).

6. The apparatus according to claim 5, **characterized in that** said gas analyzer (26) allows to detect and measure 02 and CO2 gases; said gas analyzer (26) being provided with an air pump that draws gas samples from said chamber (12) and said reference gas container (11).

7. The apparatus according to claim 6, **characterized in that** it comprises an electronic control panel (27) that has the function of coordinating the opening of said valves (13, 14, 15, 16, 17), the actuation of said pump (25) and the operation of said absorber (28) according to preset parameters such as the respiratory quotient, the RQ determination time, the 02 and CO2 set-points of said cell (1); said absorber (28) being connected to said cell (1) by means of at least two independent pipes (50) and constituting a CO2 absorber and an 02 injector.

8. A method for controlling controlled atmosphere cells for storing perishable items, **characterized in that** it comprises the steps of:

    inserting a sample quantity of products contained in a storage cell (1) inside a chamber (12) that is arranged inside said cell (1) and is connected to a container (11); said container (11) being arranged inside said cell (1) and being connected to said cell (1) and to said at least one chamber (12);
    isolating said container (11) and said chamber (12) from the cell (1) for 24-36 hours;
    determining the CO2 and 02 values in said chamber (12);
    determining the CO2 and 02 values in said container (11);
    calculating the respiratory quotient;
    comparing the calculated respiratory quotient with a reference respiratory quotient;
    adjusting the oxygen set-point value;
    normalizing the flow in said chamber (12);
    determining and correcting the 02 and CO2 values in conformity with the 02 and CO2 set-points.

## Patentansprüche

1. Eine Steuerungsvorrichtung für Zellen mit gesteuerter Atmosphäre zur Lagerung verderblichen Güter, die mindestens eine Zelle (1) umfasst, die ausgebildet ist, Produkte (125) zu enthalten, und mindestens eine Kammer (12), die in der Zelle (1) angeordnet und ausgebildet ist, um eine Probenmenge der Produkte (125) zu enthalten; wobei die Kammer (12) gegenüber der Zelle (1) isolierbar und mit einem Steuergerät (9) verbunden ist, das ausgebildet ist, um den respiratorischen Quotienten der Probenmenge zu bestimmten; wobei die Vorrichtung **dadurch gekennzeichnet ist, dass** sie mindestens einen Behälter (11) umfasst, der innerhalb der Zelle (1) angeordnet und mit dieser durch ein Ventilmittel (13) verbunden ist, wobei der Behälter (11) eine Gasmenge von der Zelle (1) empfängt und von der Zelle (1) isolierbar ist; wobei der Behälter (11) mit der mindestens einen Kammer (12) verbunden ist, um einen Gasfluss in die Kammer (12) zu übertragen.

2. Die Vorrichtung gemäß Anspruch 1, **dadurch gekennzeichnet, dass** der Behälter (11) ein Behälter (11) mit variablem Volumen ist.

3. Die Vorrichtung gemäß Anspruch 2, **dadurch gekennzeichnet, dass** der Behälter (11) mindestens eine verformbare Wand umfasst.

4. Die Vorrichtung gemäß Anspruch 1, **dadurch gekennzeichnet, dass** sie einen $CO_2$-Absorber (28) mit einem automatischen $O_2$-Injektionssystem, ein Puffervolumen (41) zum Ausgleichen von Druckschwankungen der Zelle (1) und einen Gasprüfer (26) umfasst.

5. Die Vorrichtung gemäß Anspruch 1, **dadurch gekennzeichnet, dass** der Behälter (11) mit der Kammer (12) über ein Rückschlagventil (29) verbunden ist; wobei eine Rohrleitung (35) die Kammer (12) mit einem ersten Ventil (14) und mit einem zweiten Ventil (15) des Steuergeräts (9) verbindet, wobei ein erster Verteiler (18) mit einem vierten Ventil (17) und mit einem Gasprüfer (26) verbunden ist, ein zweiter Verteiler (19) mit einem dritten Ventil (16) und mit dem Gasprüfer (26) verbunden ist, ein dritter Verteiler (20) mit einem zweiten Ventil (15) und mit dem Gasprüfer (26) verbunden ist und ein vierter Verteiler (21) an einem Ende mit einem ersten Durchflussmesser (23) und am anderen Ende mit einer Saugpumpe (25) verbunden ist, mit Anordnung eines Unterdruckmessers (24) dazwischen; wobei ein zweiter Durchflussmesser (22), gemeinsam mit dem ersten Durchflussmesser (23), außerhalb der Zelle (1) installiert ist.

6. Die Vorrichtung gemäß Anspruch 5, **dadurch gekennzeichnet, dass** der Gasprüfer (26) es ermöglicht, $O_2$- und $CO_2$-Gase zu erfassen und zu messen; wobei der Gasprüfer (26) mit einer Luftpumpe ausgestattet ist, die Gasproben aus der Kammer (12) und dem Referenz-Gasbehälter (11) entnimmt.

7. Die Vorrichtung gemäß Anspruch 6, **dadurch gekennzeichnet, dass** sie eine elektronische Steuertafel (27) umfasst, die die Funktion hat, das Öffnen der Ventile (13, 14, 15, 16, 17), die Betätigung der Pumpe (25) und die Arbeit des Absorbers (28) entsprechend voreingestellter Parameter zu koordinieren, wie zum Beispiel dem respiratorischen Quotienten, der RQ-Ermittlungszeit, den $O_2$- und $CO_2$-Sollwerten der Zelle (1), wobei der Absorber (28) mit der Zelle (1) über mindestens zwei unabhängige Rohre (50) verbunden ist und einen $CO_2$-Absorber und einen $O_2$-Injektor bildet.

8. Ein Verfahren zum Steuern von Zellen mit gesteuerter Atmosphäre zur Lagerung verderblicher Güter, **dadurch gekennzeichnet, dass** es folgende Schritte umfasst:

Einführen einer Probenmenge von Produkten, die in einer Speicherzelle (1) in einer Kammer (12) enthalten sind, die innerhalb der Zelle (1) angeordnet und mit einem Behälter (11) verbunden ist; wobei der Behälter (11) innerhalb der Zelle (1) angeordnet und mit der Zelle (1) und mit der mindestens einen Kammer (12) verbunden ist;
Isolieren des Behälters (11) und der Kammer (12) von der Zelle (1) über 24-36 Stunden;
Bestimmen der $CO_2$- und $O_2$-Werte in der Kammer (12);
Bestimmen der $CO_2$- und $O_2$-Werte in dem Behälter (11);
Berechnen des respiratorischen Quotienten;
Vergleichen des berechneten respiratorischen Quotienten mit einem respiratorischen Referenzquotienten;
Einstellen des Sauerstoff-Sollwerts;
Normalisieren des Flusses in der Kammer (12);
Ermitteln und Korrigieren der $O_2$- und $CO_2$-Werte in Übereinstimmung mit den $O_2$- und $CO_2$-Sollwerten.

## Revendications

1. Appareil de contrôle pour des cellules sous atmosphère contrôlée pour stocker des articles périssables, comprenant au moins une cellule (1) adaptée pour contenir des produits (125) et au moins une chambre (12) agencée à l'intérieur de ladite cellule (1) et adaptée pour contenir une quantité d'échantillons desdits produits (125); ladite chambre (12) pouvant être isolée par rapport à ladite cellule (1) et étant reliée à un dispositif de contrôle (9) adapté pour déterminer le quotient respiratoire de ladite quantité d'échantillons; ledit appareil étant **caractérisé en ce qu'**il comprend au moins un récipient (11) agencé à l'intérieur de ladite cellule (1) et relié à celle-ci par un moyen de valve (13), ledit récipient (11) recevant une quantité de gaz de ladite cellule (1) et pouvant être isolé de ladite cellule (1); ledit récipient (11) étant relié à ladite au moins une chambre (12) afin de transmettre un flux dudit gaz dans ladite chambre (12).

2. Appareil selon la revendication 1, **caractérisé en ce que** ledit récipient (11) est un récipient à volume variable (11).

3. Appareil selon la revendication 2, **caractérisé en ce que** ledit récipient (11) comprend au moins une paroi déformable.

4. Appareil selon la revendication 1, **caractérisé en ce qu'**il comprend un absorbeur de CO2 (28) avec un système automatique d'injection d'02, un volume tampon (41) pour équilibrer les variations de pression de ladite cellule (1) et un analyseur de gaz (26).

5. Appareil selon la revendication 1, **caractérisé en ce que** ledit récipient (11) est relié à ladite chambre (12) au moyen d'un clapet anti-retour (29) ; une tubulure (35) reliant ladite chambre (12) à une première valve (14) et à une deuxième valve (15) dudit dispositif de contrôle (9); un premier collecteur (18) étant relié à une quatrième valve (17) et à un analyseur de gaz (26); un deuxième collecteur (19) étant relié à une troisième valve (16) et audit analyseur de gaz (26); un troisième collecteur (20) étant relié à une deuxième valve (15) et audit analyseur de gaz (26); un quatrième collecteur (21) étant relié par une extrémité à un premier débitmètre (23) et par l'autre extrémité à une pompe d'aspiration (25) avec un manomètre à dépression (24) intercalé; un deuxième débitmètre (22) étant installé, conjointement avec ledit premier débitmètre (23) hors de ladite cellule (1).

6. Appareil selon la revendication 5, **caractérisé en ce que** ledit analyseur de gaz (26) permet de détecter et de mesurer les gaz 02 et CO2; ledit analyseur de gaz (26) étant doté d'une pompe à air qui attire des échantillons de gaz de ladite chambre (12) et dudit récipient de gaz de référence (11).

7. Appareil selon la revendication 6, **caractérisé en ce qu'**il comprend un panneau de commande électronique (27) qui a la fonction de coordonner l'ouverture desdits valves (13, 14, 15, 16, 17), l'actionnement de ladite pompe (25) et le fonctionnement dudit absorbeur (28) selon des paramètres pré-réglés tels que le quotient respiratoire, le temps de détermination du QR, les points de consigne d'O2 et de CO2 de ladite cellule (1) ; ledit absorbeur (28) étant relié à ladite cellule (1) au moyen d'au moins deux conduits indépendants (50) et constituant un absorbeur de CO2 et un injecteur d'O2.

8. Procédé de contrôle de cellules sous atmosphère contrôlée pour stocker des articles périssables, **caractérisé en ce qu'**il comprend les étapes:

d'insertion d'une quantité d'échantillons de produits contenus dans une cellule de stockage (1) à l'intérieur d'une chambre (12) qui est agencée à l'intérieur de ladite cellule (1) et est reliée à un récipient (11); ledit récipient (11) étant agencé à l'intérieur de ladite cellule (1) et étant relié à ladite cellule (1) et à ladite au moins une chambre (12);

d'isolation dudit récipient (11) et de ladite chambre (12) de la cellule (1) pendant 24-36 heures;

de détermination des valeurs de $CO_2$ et d'$O_2$ dans ladite chambre (12);

de détermination des valeurs de $CO_2$ et d'$O_2$ dans ledit récipient (11);

de calcul du quotient respiratoire;

de comparaison du quotient respiratoire calculé à un quotient respiratoire de référence;

d'ajustement de la valeur de consigne de l'oxygène;

de normalisation du flux dans ladite chambre (12);

de détermination et de correction des valeurs d'$O_2$ et de $CO_2$ en conformité avec les points de consigne d'$O_2$ et de $CO_2$.

Fig. 1

Fig.2

Fig.3

Fig. 4

WITHOUT GAS IN
THE CHAMBER

Fig. 5

Fig. 6

Fig.7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120097050 A

- WO 2013125944 A
- WO 2011113915 A